# EUROPÄISCHE PATENTSCHRIFT

(11) **EP 1 435 634 B1**
(45) Veröffentlichungstag und Bekanntmachung des Hinweises auf die Patenterteilung: **13.12.2006**
(21) Anmeldenummer: 03029041.5
(22) Anmeldetag: 16.12.2003
(51) Int. Cl.: H01H 27/00, A47J 19/02, H01H 3/16, H01H 21/28, A47J 43/07

(54) **Sicherheitsschalter für elektrisches Küchengerät**
Safety switch for electrical kitchen device
Interrupteur de sécurité pour appareil de cuisine

(30) Priorität: 30.12.2002 DE 10261369
(43) Veröffentlichungstag der Anmeldung: 07.07.2004
(73) Patentinhaber: BSH Bosch und Siemens Hausgeräte GmbH, 81739 München (DE)
(72) Erfinder: Pavlovic, Henrik, 3333 Ljubno ob Savinji (SI); Sedovsek, Aleksander, 3330 Mozirje (SI); Semeja, Uros, 3327 Smartno ob Paki (SI); Zibret, Igor, 3327 Smartno ob Paki (SI)

(56) Entgegenhaltungen:
- EP-A- 0 599 002
- FR-A- 2 415 354
- US-B1- 6 375 102

## Beschreibung

Die Erfindung betrifft einen Sicherheitsschalter für ein elektrisches Küchengerät, insbesondere für eine Mischzerkleinerungsvorrichtung mit den im Oberbegriff des Patentanspruchs 1 genannten Merkmalen.

Mischzerkleinerungsvorrichtungen für den Haushalt sind bekannt. Diese sog. Blender weisen ein Motorgehäuse mit einem elektrischen Antriebsmotor und einen auf eine Oberseite des Gehäuses aufsetzbaren Becher auf, in dessen unterem Bereich eine Werkzeugwelle um eine vertikale Achse rotieren kann. Der unten offene Becher kann normalerweise mitsamt einem Bodenbereich vom Gehäuse abgenommen werden, um den darin zuvor zerkleinerten und/oder fein durchmischten Inhalt in ein Gefäß entleeren zu können. Der Bodenbereich ist typischerweise als sog. Becherträger ausgestaltet, der den damit verbundenen Becher nach außen und zum Motor hin abdichtet und der gleichzeitig eine Halterung für die von einer Abtriebswelle des Antriebsmotor trennbare Messer- bzw. Werkzeugwelle bildet.

Damit bei vom Gehäuse abgenommenem Becher und/oder Becherträger die Werkzeugwelle nicht freiliegend rotiert, ist normalerweise eine Schalteinrichtung vorgesehen, die bspw. einen in eine entsprechende Aussparung des Becherträgers eingreifenden Zapfen aufweisen kann, der einen Schieber oder Drehschalter betätigt und für eine Unterbrechung einer Stromversorgung für den Antriebsmotor sorgt. Damit der Zapfen aus einer ersten Stellung bei aufgesetztem Becherträger bzw. Becher jederzeit in seine entspannte Stellung zurück springt, weist er sinnvollerweise eine Federunterstützung auf. Eine solche Feder kann bspw. als Drehfeder ausgebildet sein.

US-A-6375102 offenbart einen Schalter gemäß dem Oberbegriff des Anspruchs 1 mit einem Hebel der kein Drehhebel ist.

Eine Aufgabe der vorliegenden Erfindung besteht darin, bei einem gattungsgemäßen elektrischen Küchengerät einen möglichst einfach aufgebauten federunterstützten Sicherheitsschalter zur Verfügung zu stellen.

Diese Aufgabe wird mit einem Sicherheitsschalter mit den im Patentanspruch 1 genannten Merkmalen gelöst. Der Sicherheitsschalter umfasst eine Vorspanneinrichtung, die einen Drehhebel in eine nicht geschaltete Position vorspannt, sobald ein Becher vom Gehäuse des Küchengeräts abgenommen ist. Die Vorspanneinrichtung ist ein elastischer Federbügel, der einstückig am Drehhebel ausgebildet ist. Der Drehhebel weist einen Zapfen zum Eingriff im Becher bzw. im Becherträgers auf. Am Drehhebel ist ein Federbügel angeordnet, der für eine Rückstellung des Drehhebels aus einer Freigabestellung in eine nicht geschaltete Position sorgt. Der Federbügel und der Verriegelungszapfen sind jeweils einstückig mit dem Drehhebel ausgebildet. Dieser besteht vorzugsweise aus Kunststoff, insbesondere aus faserverstärktem Kunststoff. Die elastische Verformbarkeit des Federbügels sorgt für die rückstellende Kraft aus der ausgelenkten, Position. Der erfindungsgemäße Sicherheitsschalter lässt sich mit dem einfach und kostengünstig aus einem einzigen Teil herstellbaren Drehhebel auf sehr einfache Weise realisieren. Die Rückstellkraft kann durch die Gestaltung des Drehhebels selbst erreicht werden, so dass keine weiteren Federelemente notwendig sind, welche die Anordnung verteuern würden.

Vorzugsweise weist der Drehhebel einen Hohlzylinder auf, der um eine vertikale Achse im Gehäuse schwenkbar gelagert ist. Am Hohlzylinder ist zweckmäßigerweise ein Mitnehmerbügel angeordnet, der eine Betätigung einer am Gerät vorgesehenen Kontaktfeder ermöglicht. Die Kontaktfeder sorgt bei einer Betätigung durch den Drehhebel für eine Unterbrechung der Stromzufuhr des Antriebsmotors.

Ein freies Ende des elastisch verformbaren Federbügels ist vorzugsweise in einem Gegenlager des Gehäuses fixiert. Weiterhin kann im Gehäuse ein Anschlagzapfen zur Begrenzung eines maximalen Schwenkwinkels des Drehhebels vorgesehen sein. Weitgehend alle genannten Bauteile lassen sich auf einfache und kostengünstige Weise aus Kunststoff herstellen, bspw. als einfache Spritzgussteile. Somit kann eine sehr kostengünstig und zuverlässig funktionierende Sicherheitseinrichtung zur Verfügung gestellt werden, die sich universell auch für andere Geräte verwenden lässt.

Weitere Aspekte und vorteilhafte Weiterbildungen der Erfindung ergeben sich aus den abhängigen Ansprüchen sowie aus der nachfolgenden Figurenbeschreibung.

Nachstehend wird die Erfindung anhand eines Ausführungsbeispiel unter Bezugnahme auf die beiliegenden Zeichnungen näher erläutert. Dabei zeigt:
- Figur 1: eine schematische Schnittdarstellung einer Mischzerkleinerungsvorrichtung mit einem erfindungsgemäßen Sicherheitsschalter,
- Figuren 2 bis 4: schematische Teilschnitte zur Verdeutlichung der Anordnung und Wirkungsweise des Sicherheitsschalters und
- Figur 5: eine perspektivische Darstellung eines Drehhebels des Sicherheitsschalters.

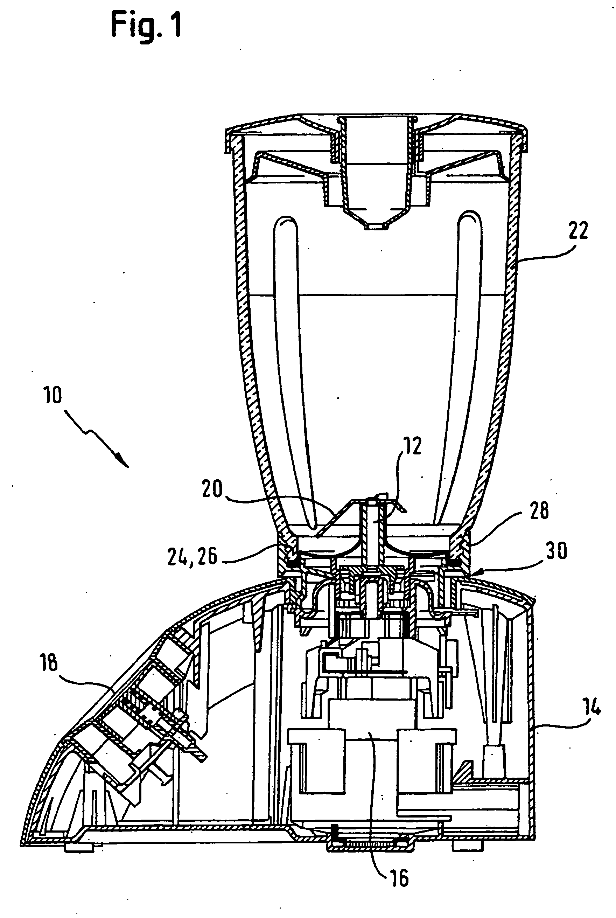

Ein erfindungsgemäßer Sicherheitsschalter 8 wird im Folgenden beispielhaft anhand einer Mischzerkleinerungsvorrichtung 10 erläutert. Die Mischzerkleinerungsvorrichtung 10 weist eine rotierende Werkzeugwelle 12 auf und umfasst ein Gehäuse 14 mit einer darin angeordneten Antriebsvorrichtung, vorzugsweise einem elektrischen Antriebsmotor 16 (vgl. Figur 1). An einer Frontseite des Gehäuses 14 ist eine Betätigungseinrichtung 18 zur Steuerung der Funktionen der Mischzerkleinerungsvorrichtung 10 vorgesehen.

Die Werkzeugwelle 12 mit daran angeordneten Messern 20 weist eine vertikale Drehachse auf und ragt in einen Becher 22, der auf eine Oberseite des Gehäuses 14 aufgesetzt ist und bei Bedarf hiervon abgenommen werden kann. Der Becher 22 weist eine offene Unterseite 24 mit einem ringförmigen Bund 26 auf, der eine zylindrische Außenmantelfläche mit einem darauf befindlichen Außengewinde oder einer Bajonettpassung o. dgl. aufweist. Diese korrespondiert mit einem entsprechenden Innengewinde bzw. einer Gegenpassung einer Bajonettverriegelung eines Becherträgers 28. Der Becherträger 28 kann gemeinsam mit dem Becher 22 vom Gehäuse 14 abgenommen werden und dichtet in diesem Fall die offene Unterseite 24 des Bechers 22 ab. Bei fest mit dem Becherträger 28 verbundenem Becher 22 bleibt die Werkzeugwelle 12 auch bei abgenommenem Becher 22 mit diesem verbunden, da diese in einem Lagerschild gelagert ist, der zwischen Becher 22 und Becherträger 28 fixiert ist. Die Werkzeugwelle 12 ist über eine axial lösbare Kupplung mit dem Antriebsmotor 16 gekoppelt, so dass sie durch abziehen des Becherträgers 28 problemlos aus einem Dreheingriff mit einer Abtriebswelle des Motors bringbar ist.

Der Becherträger 28 befindet sich im aufgesetzten Zustand in einer entsprechenden Aufnahme 30 an der Oberseite des Gehäuses 14 und ist dort bspw. mittels eines Bajonettverschlusses lösbar verriegelt, so dass er nicht unbeabsichtigt gelöst werden kann.

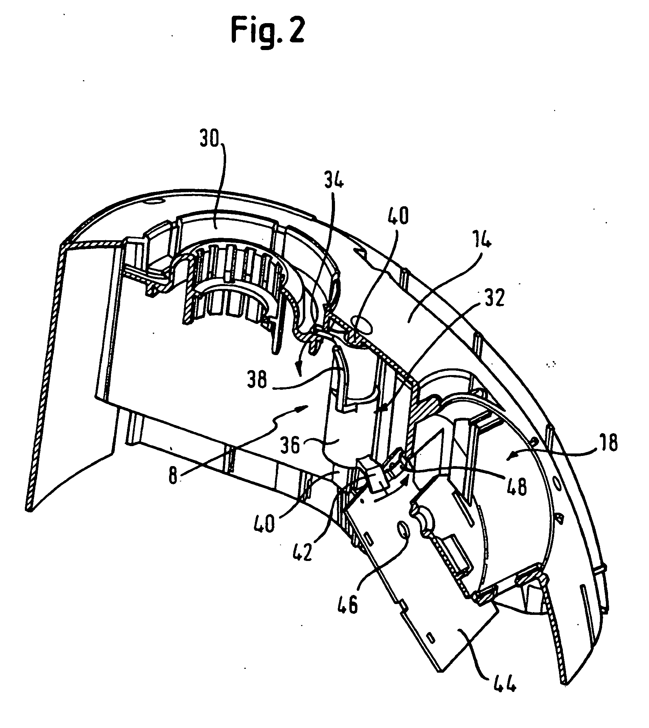

Die Figuren 2 bis 5 verdeutlichen die Anordnung und Wirkungsweise des erfindungsgemäßen Sicherheitsschalters 8, der vorzugsweise bei abgenommenem Becher 22 bzw. Becherträger 28 für eine Unterbrechung der Stromzufuhr des Antriebsmotors 16 sorgt.

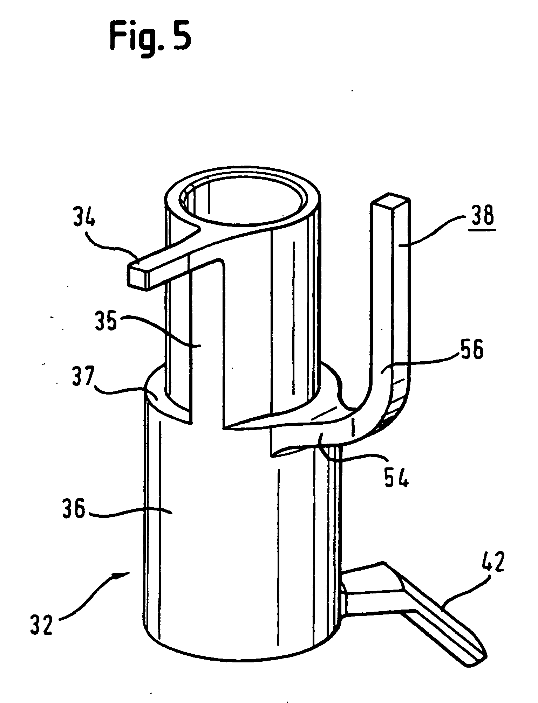

Der Sicherheitsschalter 8 umfasst einen schwenkbar gelagerten Drehhebel 32 (vgl. Figur 5), der eine hohlzylindrische Gestalt mit mehreren an einem Außenmantel des Hohlzylinders 36 angeordneten Zapfen und Bügeln aufweist. Nahe einer oberen Stirnseite des Hohlzylinders 36 ragt senkrecht ein Mitnehmerzapfen 34 aus der Außenmantelfläche. Nahe einer unteren Stirnseite ragt ein Mitnehmerbügel 42 aus der Mantelfläche, der in einem ersten Abschnitt senkrecht zur Mantelfläche ausgerichtet ist und nach einem Knick schräg nach unten weist. Ungefähr mittig zwischen den beiden Stirnseiten ist ein Federbügel 38 vorgesehen, der einen senkrecht zur Außenmantelfläche abstehenden Sockelbereich 54 und einen rechtwinkelig daran anschließenden Federabschnitt 56 aufweist, der in paralleler Richtung zur Außenmantelfläche des Hohlzylinders 36 in Richtung zur oberen Stirnseite verläuft und knapp oberhalb dieser endet. Aufgrund des steiferen Sockelbereichs 54 des Federbügels 38 kann im Wesentlichen nur dessen Federabschnitt 56 einer elastischen Verformung unterliegen.

Der Hohlzylinder 36 weist ungefähr mittig einen Absatz 37 auf, an dem sich der Außendurchmesser ändert. Der untere Bereich mit dem Mitnehmerbügel 42 und dem Sockelbereich 54 für den Federbügel 38 weist einen größeren Durchmesser auf als der obere Bereich mit dem Mitnehmerzapfen 34. Um diesem die erforderliche Steifigkeit und Stabilität zu geben, ist allerdings eine Verstärkung 35 vorgesehen, die vom Absatz 37 bis zur oberen Stirnseite reicht, in axialer Richtung an der Außenmantelfläche des Hohlzylinders 36 verläuft und aus welcher der Mitnehmerzapfen 34 ragt.

Zumindest der Federbügel 38 muss eine ausreichende elastische Verformbarkeit aufweisen, um die gewünschte Funktion des Sicherheitsschalters 8 gewährleisten zu können. Vorzugsweise besteht der Federbügel 38 aus Kunststoff, der ggf. eine Faserverstärkung aufweisen kann. Um einen möglichst kostengünstig und einfach herstellbaren Drehhebel 32 zu erhalten, besteht dieser vorzugsweise aus einem einzigen Teil aus Kunststoff, das problemlos in einem Spritzgießprozess hergestellt werden kann.

Der Drehhebel 32 ist innerhalb des Gehäuses 14 in vertikaler Richtung eingebaut und um einer vertikale Achse schwenkbar gelagert. Hierzu greift ein vom Gehäusedeckel nach innen ragender oberer Lagerzapfen 40 von oben in den Hohlzylinder 36 ein. Ein entsprechender Lagerzapfen 40 greift in gleicher Weise von unten in den Hohlzylinder 36 ein, so dass dieser um die Lagerzapfen 40 geschwenkt werden kann. Der Mitnehmerbügel 42 wirkt auf eine Kontaktfeder 48, die auf einem Montageblech 44 angebracht ist. Am Montageblech 44 ist eine Durchführung 46 für eine Welle eines Drehschalters (nicht dargestellt) der Betätigungseinrichtung 18 erkennbar.

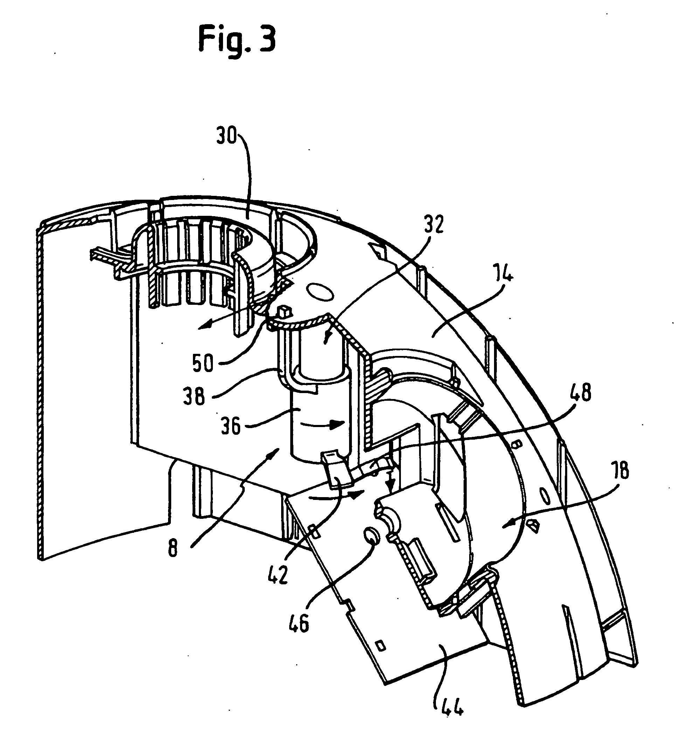

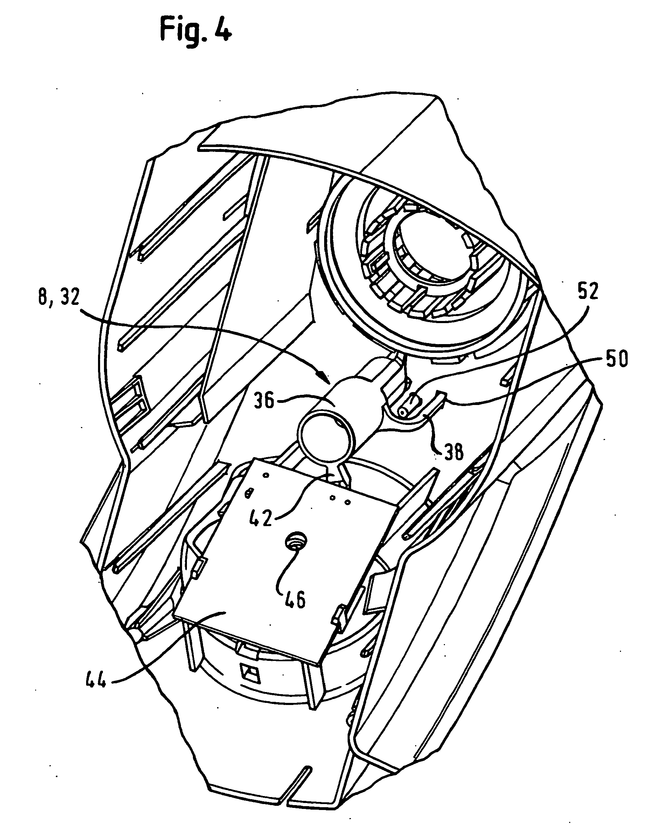

Wird der Becher 22 oder der Becherträger 28 aus seiner Aufnahme 30 entnommen, wird hierdurch der Mitnehmerzapfen 34 frei gegeben, so dass der elastisch vorgespannte Drehhebel 32 aus einer geschalteten Position in eine nicht geschaltete Position springt. Hierdurch wird die Kontaktfeder 48 entlastet, so dass eine Stromzufuhr unterbrochen und der Antriebsmotor abgeschaltet wird. Wird der Becher 22 oder der Becherträger wieder aufgesetzt, wird der Mitnehmerzapfen 34 aus seiner entspannten Stellung gebracht, wobei der Drehhebel 32 verschwenkt wird. Der Schwenkbewegung in Richtung der Pfeile (Figur 3) wirkt eine Federkraft des dabei elastisch verformten Federbügels 38 entgegen, dessen oberes freies Ende in ein Gegenlager 50 im Gehäuse 14 eingreift (Figur 4). Die Federkraft sorgt für ein Zurückschwenken des Drehhebels 32, sobald der Mitnehmerzapfen 34 wieder in die Aufnahme 30 schwenken kann. Ein Schwenkanschlag wird durch einen Anschlagzapfen 52 gebildet, an dem der Sockelbereich 54 des Federbügels 38 anliegt, sobald sich der Drehhebel 32 in einer voll ausgelenkten Stellung befindet.

Die einstückige Ausbildung des Drehhebels 32 ermöglicht einen einfach aufgebauten und kostengünstigen Sicherheitsschalter 8. Die Elastizität der freien Länge des Federabschnittes 56 des Federbügels 38 sorgt für die erforderliche Rückstellkraft des Drehhebels 32 aus seiner ausgelenkten Stellung, bei welcher der Mitnehmerzapfen 34 aus seinem Eingriff mit dem Becherträger 28 gebracht ist.

## Patentansprüche

1. Sicherheitsschalter für ein elektrisches Küchengerät, insbesondere für eine Mischzerkleinerungsvorrichtung (10) mit einem Gehäuse (14) und mit einem auf dem Gehäuse (14) montierbaren Becher (22), wobei der Sicherheitsschalter einen Drehhebel (32) aufweist, der eine nicht geschaltete Position einnehmen kann, wenn der Becher (22) nicht auf dem Gehäuse (14) montiert ist, und der durch das Montieren des Bechers (22) auf dem Gehäuse (14) in eine geschaltete Position bewegbar ist, wobei der Sicherheitsschalter weiter eine Vorspanneinrichtung, die den Drehhebel (32) in die nicht geschaltete Position vorspannt, aufweist, **dadurch gekennzeichnet, dass** die Vorspanneinrichtung als ein elastischer Federbügel (38) einstückig am Drehhebel (32) ausgebildet ist.

2. Sicherheitsschalter nach Anspruch 1, **dadurch gekennzeichnet, dass** der Becher (22) eine rotierende Werkzeugwelle (12) hat, die über einen im Gehäuse (14) untergebrachten Motor (16) antreibbar ist, und dass zwischen der Werkzeugwelle (12) und dem Antriebsmotor (16) eine lösbare Kupplung vorgesehen ist.

3. Sicherheitsschalter nach Anspruch 1 oder 2, **dadurch gekennzeichnet, dass** der Becher (22) über eine lösbare Verbindungseinrichtung, bevorzugt eine Bajonettverbindung, mit dem Gehäuse (14) verbindbar ist.

4. Sicherheitsschalter nach einem der Ansprüche 1 bis 3, **dadurch gekennzeichnet, dass** der Becher (22) einen Becherträger (28) und einen die Werkzeugwelle (12) lagernden Lagerschild hat, und dass der Lagerschild über dem Becherträger (28) am Becher (22) montierbar ist.

5. Sicherheitsschalter nach einem der Ansprüche 1 bis 4, **dadurch gekennzeichnet, dass** der Drehhebel (32) einen daran angeordneten Mitnehmerzapfen (34) aufweist. und dem Federbügel (38) aus Kunststoff, insbesondere aus faserverstärktem Kunststoff besteht.

6. Sicherheitsschalter nach einem der Ansprüche 1 bis 5, **dadurch gekennzeichnet, dass** der Drehhebel (32) mit dem daran angeordneten Mitnehmerzapfen (34) und dem Federbügel (38) aus Kunststoff, insbesondere aus faserverstärktem Kunststoff besteht.

7. Sicherheitsschalter nach einem der Ansprüche 1 bis 6, **dadurch gekennzeichnet, dass** der Federbügel (38) elastisch verformbar ist.

8. Sicherheitsschalter nach einem der Ansprüche 1 bis 7, **dadurch gekennzeichnet, dass** der Drehhebel (32) einen, um eine vertikale Achse schwenkbar gelagerten Hohlzylinder (36) aufweist.

9. Sicherheitsschalter nach einem der Ansprüche 1 bis 8, **dadurch gekennzeichnet, dass** der Drehhebel (32) einen Mitnehmerbügel (42) zur Betätigung einer Kontaktfeder (48) aufweist.

10. Sicherheitsschalter nach einem der vorhergehenden Ansprüche, **dadurch gekennzeichnet, dass** ein freies Ende des elastisch verformbaren Federbügels (38) in einem Gegenlager (50) des Gehäuses (14) gelagert ist.

11. Sicherheitsschalter nach einem der vorhergehenden Ansprüche, **dadurch gekennzeichnet, dass** im Gehäuse (14) ein Anschlagzapfen (52) zur Begrenzung eines maximalen Schwenkwinkels des Drehhebels (32) vorgesehen ist.

## Claims

1. Safety switch for an electric kitchen appliance, particularly for a food processor (10), with a housing (14) and with a beaker (22) mountable on the housing (14), wherein the safety switch comprises a rotary lever (32), which can adopt an unswitched position when the beaker (22) is not mounted on the housing (14) and which through mounting of the beaker (22) on the housing (14) is movable into a switched position, wherein the safety switch further comprises a biasing device which biases the rotary lever (32) into the unswitched position, **characterised in that** the biasing device is constructed integrally at the rotary lever (32) as a resilient spring yoke (38).

2. Safety switch according to claim 1, **characterised in that** the beaker (22) has a rotating tool shaft (12), which is drivable by way of a motor (16) accommodated in the housing (14), and that a releasable coupling is provided between the tool shaft (12) and the drive motor (16).

3. Safety switch according to claim 1 or 2, **characterised in that** the beaker (22) is connectible with the housing (14) by way of a releasable connecting device, preferably a bayonet connection.

4. Safety switch according to one of claims 1 to 3, **characterised in that** the beaker (22) has a beaker support (28) and a bearing plate mounting the tool shaft (12), and that the bearing plate can be mounted on the beaker (22) by way of the beaker support (28).

5. Safety switch according to one of claims 1 to 4, **characterised in that** the rotary lever (32) has an entrainer pin (34) arranged thereat and the spring yoke (38) consists of plastics material, preferably of fibre-reinforced plastics material.

6. Safety switch according to one of claims 1 to 5, **characterised in that** the rotary lever (32) together with the entrainer pin (34) arranged thereat and the spring yoke (38) consists of plastics material, particularly of fibre-reinforced plastics material.

7. Safety switch according to one of claims 1 to 6, **characterised in that** the spring yoke (38) is resiliently deformable.

8. Safety switch according to one of claims 1 to 7, **characterised in that** the rotary lever (32) comprises a hollow cylinder (36) mounted to be pivotable about a vertical axis.

9. Safety switch according to one of claims 1 to 8, **characterised in that** the rotary lever (32) has an entrainer yoke (42) for actuation of a contact spring (48).

10. Safety switch according to one of the preceding claims, **characterised in that** a free end of the resiliently deformable spring yoke (38) is mounted in a counter-bearing (50) of the housing (14).

11. Safety switch according to one of the preceding claims, **characterised in that** an abutment pin (52) for limitation of a maximum pivot angle of the rotary lever (32) is provided in the housing (14).

## Revendications

1. Commutateur de sécurité pour un appareil électrique de cuisine, en particulier pour un dispositif broyeur-mélangeur (10) comprenant un boîtier (14) et un vase (22) pouvant être monté sur le boîtier (14), le commutateur de sécurité comportant un levier rotatif (32) qui peut prendre une position de non commutation lorsque le vase (22) n'est pas monté sur le boîtier (14) et qui peut être mis dans une position de commutation par le montage du vase (22) sur le boîtier (14), le commutateur de sécurité comportant en outre un dispositif de précontrainte qui précontraint le levier rotatif (32) dans la position de non commutation, **caractérisé en ce que** le dispositif de précontrainte est réalisé d'une seule pièce sur le levier rotatif (32) en tant qu'étrier de ressort (38).

2. Commutateur de sécurité selon la revendication 1, **caractérisé en ce que** le vase (22) a un arbre d'outil (12) rotatif qui peut être entraîné par un moteur logé dans le boîtier (14) et **en ce qu'**est prévu un accouplement (16) amovible entre l'arbre d'outil (12) et le moteur d'entraînement (16).

3. Commutateur de sécurité selon la revendication 1 ou 2, **caractérisé en ce que** le vase (22) peut être assemblé au boîtier (14) par un dispositif d'assemblage amovible, de préférence un assemblage à baïonnette.

4. Commutateur de sécurité selon l'une des revendications 1 à 3, **caractérisé en ce que** le vase (22) a un support de vase (28) et un flasque logeant l'arbre d'outil (12) et **en ce que** le flasque peut être monté sur le vase (22) au-dessus du support de vase (28).

5. Commutateur de sécurité selon l'une des revendications 1 à 4, **caractérisé en ce que** le levier rotatif (32) comporte un téton d'entraînement (34) situé dessus et l'étrier de ressort (38) se compose de matière plastique, en particulier de matière plastique renforcée par des fibres.

6. Commutateur de sécurité selon l'une des revendications 1 à 5, **caractérisé en ce que** le levier rotatif (32), avec le téton d'entraînement (34) situé dessus et l'étrier de ressort (38), se compose de matière plastique, en particulier de matière plastique renforcée par des fibres.

7. Commutateur de sécurité selon l'une des revendications 1 à 6, **caractérisé en ce que** l'étrier de ressort (38) est déformable élastiquement.

8. Commutateur de sécurité selon l'une des revendications 1 à 7, **caractérisé en ce que** le levier rotatif (32) comporte un cylindre creux (36) logé pivotant autour d'un axe vertical.

9. Commutateur de sécurité selon l'une des revendications 1 à 8, **caractérisé en ce que** le levier rotatif (32) comporte un étrier d'entraînement (42) pour actionner un ressort de contact (48).

10. Commutateur de sécurité selon l'une des revendications précédentes, **caractérisé en ce qu'**une extrémité libre de l'étrier de ressort (38) déformable élastiquement est logée dans un contre-palier (50) du boîtier (14).

11. Commutateur de sécurité selon l'une des revendications précédentes, **caractérisé en ce qu'**est prévu, dans le boîtier (14), un téton de butée (52) pour limiter un angle de pivotement maximal du levier rotatif (32).
